# EUROPEAN PATENT APPLICATION

(11) **EP 3 786 988 A1**
(43) Date of publication of application: **03.03.2021**
(21) Application number: 19820525.4
(22) Date of filing: 05.05.2019
(51) Int. Cl.: H01F 38/14

(54) **WIRELESS CHARGING COIL, WIRELESS CHARGING ASSEMBLY AND ELECTRONIC DEVICE**

(30) Priority: 11.06.2018 CN 201810595633; 11.06.2018 CN 201820904997 U
(71) Applicant: GUANGDONG OPPO MOBILE TELECOMMUNICATIONS CORP., LTD., Dongguan Guangdong 523860 (CN)
(72) Inventor: WAN, Shiming, Dongguan, Guangdong 523860 (CN)
(74) Representative: Mewburn Ellis LLP
(86) International application number: PCT/CN2019/085500
(87) International publication number: WO 2019/237848

(57) **Abstract**

A wireless charging coil, a wireless charging assembly, and an electronic device are provided. The wireless charging coil includes a first connection end and a second connection end. The first connection end is disposed in the center of the wireless charging coil. The second connection end is disposed at an edge of the wireless charging coil. The first connection end is configured to be directly connected with a connection point on a circuit board. If the above wireless charging coil is adopted, thickness of the wireless charging coil can be reduced.

## Description

### CROSS-REFERENCE TO RELATED APPLICATION(S)

This application claims priority to and the benefit of Chinese Application Patent Serial No. 201810595633.X, entitled "WIRELESS CHARGING COIL, WIRELESS CHARGING ASSEMBLY, AND ELECTRONIC DEVICE" and filed on June 11, 2018, and Chinese Application Patent Serial No. 201820904997.7, entitled "WIRELESS CHARGING COIL, WIRELESS CHARGING ASSEMBLY, AND ELECTRONIC DEVICE" and filed on June 11, 2018, the entire disclosures of which are hereby incorporated by reference.

### TECHNICAL FIELD

This disclosure relates to the technical field of electronic devices, and more particularly to a wireless charging coil, a wireless charging assembly, and an electronic device.

### BACKGROUND

With popularity of wireless charging, wireless charging can be supported by an increasing number of electronic devices, such as smart phones and wireless charging bases. With aid of a wireless charging coil, the smart phone and the wireless charging base can achieve contactless wireless charging. However, the wireless charging coil in the related art is large in thickness.

### SUMMARY

Implementations provide a wireless charging coil, a wireless charging assembly, and an electronic device, which is possible to reduce thickness of the wireless charging coil.

Implementations provide a wireless charging coil. The wireless charging coil includes a first connection end and a second connection end. The first connection end is disposed in the center of the wireless charging coil. The second connection end is disposed at an edge of the wireless charging coil. The first connection end is configured to be directly connected with a connection point on a circuit board.

Implementations provide a wireless charging assembly. The wireless charging assembly includes a wireless charging coil and a circuit board. The wireless charging coil includes a first connection end and a second connection end, where the first connection end is disposed in the center of the wireless charging coil, and the second connection end is disposed at an edge of the wireless charging coil. The circuit board includes a first connection point and a second connection point which are disposed on a surface of the circuit board, where the first connection point is directly electrically connected with the first connection end, the second connection point is electrically connected with the second connection end, and the first connection point and the second connection point are electrically connected with a wireless charging circuit.

Implementations further provide an electronic device. The electronic device includes a housing and a wireless charging assembly. The wireless charging assembly is received in the housing. The wireless charging assembly includes a wireless charging coil and a circuit board. The wireless charging coil includes a first connection end and a second connection end, where the first connection end is disposed in the center of the wireless charging coil, and the second connection end is disposed at an edge of the wireless charging coil. The circuit board includes a first connection point and a second connection point which are disposed on a surface of the circuit board, where the first connection point is directly electrically connected with the first connection end, the second connection point is electrically connected with the second connection end, and the first connection point and the second connection point are electrically connected with a wireless charging circuit.

### BRIEF DESCRIPTION OF THE DRAWINGS

In order to describe technical solutions of implementations more clearly, the following will give a brief introduction to the accompanying drawings used for describing implementations. Apparently, the following accompanying drawings are merely some implementations of the disclosure. Based on these drawings, those skilled in the art can also obtain other drawings without creative efforts.
FIG. 1 is a schematic structural diagram of a wireless charging coil according to implementations.
FIG. 2 is a schematic structural diagram of a wireless charging assembly according to implementations.
FIG. 3 is a schematic structural diagram of a wireless charging assembly according to other implementations.
FIG. 4 is a schematic structural diagram of a wireless charging assembly according to other implementations.
FIG. 5 is a cross sectional view of the wireless charging assembly along line A-A' in FIG. 4.
FIG. 6 is a schematic structural diagram of a wireless charging assembly according to other implementations.
FIG. 7 is a schematic structural diagram of a wireless charging assembly according to other implementations.
FIG. 8 is a schematic overall diagram of wireless charging according to implementations.
FIG. 9 is a schematic structural diagram of a wireless charging apparatus according to implementations.
FIG. 10 is a schematic structural diagram of a wireless charging system according to implementations.

### DETAILED DESCRIPTION

Technical solutions of implementations will be described clearly and completely with reference to the accompanying drawings in implementations of the disclosure. Apparently, the implementations described herein are merely some implementations, rather than all implementations, of the disclosure. All other implementations obtained based on the implementations described herein by those skilled in the art without creative efforts shall fall within the protection scope of the disclosure.

Implementations provide a wireless charging coil, a wireless charging assembly, and an electronic device, which will be hereinafter described in detail respectively.

Implementations provide a wireless charging coil. The wireless charging coil includes a first connection end and a second connection end. The first connection end is disposed in the center of the wireless charging coil. The second connection end is disposed at an edge of the wireless charging coil. The first connection end is configured to be directly connected with a connection point on a circuit board.

In some implementations, the wireless charging coil includes at least two turns of metal wire, where two adjacent turns of the at least two turns of metal wire are spaced apart by a gap, and the gap is filled with non-conductive material.

In some implementations, an upper surface of any one of the at least two turns of metal wire is in the same plane.

In some implementations, the wireless charging coil includes at least two turns of wire. The wire includes a metal wire and a protective layer wrapping the metal wire. The protective layer is made of non-conductive material. An upper surface of any one of the at least two turns of wire is in the same plane.

In some implementations, two adjacent turns of the at least two turns of wire are spaced apart.

In some implementations, a turn of wire with a minimum radius in the at least two turns of wire defines a receiving area. The first connection end is disposed inside the receiving area.

Implementations further provide a wireless charging assembly. The wireless charging assembly includes a wireless charging coil and a circuit board. The wireless charging coil includes a first connection end and a second connection end, where the first connection end is disposed in the center of the wireless charging coil, and the second connection end is disposed at an edge of the wireless charging coil. The circuit board includes a first connection point and a second connection point which are disposed on a surface of the circuit board, where the first connection point is directly electrically connected with the first connection end, the second connection point is electrically connected with the second connection end, and the first connection point and the second connection point are electrically connected with a wireless charging circuit.

In some implementations, the circuit board further includes an insulation layer and a wiring layer. The insulation layer is disposed on the surface of the circuit board, where the insulation layer defines a first opening, and the first connection point is disposed in the first opening. The wiring layer is disposed in the middle of the circuit board, where a first wiring (or wiring) of the wiring layer has one end electrically connected with the first connection point in the first opening and has the other end which, along with the second connection point, is electrically connected with the wireless charging circuit.

In some implementations, the insulation layer defines a second opening, and the second connection point is disposed in the second opening. The wiring layer further includes a second wiring, and the second wiring has one end electrically connected with the second connection point in the second opening and has the other end which, along with the other end of the first wiring, is electrically connected with the wireless charging circuit.

In some implementations, the first wiring includes a first wiring segment and a second wiring segment. A projection of the first wiring segment on the circuit board is inside the wireless charging coil. A projection of the second wiring segment on the circuit board is outside the wireless charging coil. The second wiring segment is adjacent to the second wiring.

In some implementations, the circuit board is divided into at least two areas by the first wiring. The circuit board further includes a functional module. The functional module includes multiple components. The multiple components are disposed in one of the at least two areas of the circuit board.

In some implementations, the first connection point is a bonding pad. The first connection point is welded to the first connection end.

In some implementations, the second connection point is a bonding pad. The second connection point is welded to the second connection end.

In some implementations, the first connection point is a bonding pad, and the first connection point is welded to the first connection end. The second connection point is a bonding pad, and the second connection point is welded to the second connection end.

Implementations further provide an electronic device. The electronic device includes a housing and a wireless charging assembly. The wireless charging assembly is received in the housing. The wireless charging assembly includes a wireless charging coil and a circuit board. The wireless charging coil includes a first connection end and a second connection end, where the first connection end is disposed in the center of the wireless charging coil, and the second connection end is disposed at an edge of the wireless charging coil. The circuit board includes a first connection point and a second connection point which are disposed on a surface of the circuit board, where the first connection point is directly electrically connected with the first connection end, the second connection point is electrically connected with the second connection end, and the first connection point and the second connection point are electrically connected with a wireless charging circuit.

In some implementations, the electronic device further includes a battery. The battery is electrically connected with the wireless charging assembly, where the wireless charging assembly is configured to charge the battery.

In some implementations, the electronic device further includes a control module. The control module is configured to control the wireless charging coil to convert electrical energy into electromagnetic energy for transmission.

In some implementations, the circuit board of the electronic device includes an insulation layer and a wiring layer. The insulation layer is disposed on the surface of the circuit board, where the insulation layer defines a first opening, and the first connection point is disposed in the first opening. The wiring layer is disposed in the middle of the circuit board, where a first wiring of the wiring layer has one end electrically connected with the first connection point in the first opening and has the other end which, along with the second connection point, is electrically connected with the wireless charging circuit.

In some implementations, the insulation layer defines a second opening, and the second connection point is disposed in the second opening. The wiring layer further includes a second wiring, and the second wiring has one end electrically connected with the second connection point in the second opening and has the other end which, along with the other end of the first wiring, is electrically connected with the wireless charging circuit.

In some implementations, the wireless charging coil includes at least two turns of metal wire, where two adjacent turns of the at least two turns of metal wire are spaced apart by a gap, and the gap is filled with non-conductive material.

In wireless charging technology, power delivery can be achieved without a cable. Therefore, wireless charging technology is increasingly more popular among consumers. According to wireless charging technology, an adaptor is generally coupled with a wireless charging apparatus (such as a wireless charging base), and via the wireless charging apparatus, an output power of the adaptor is delivered to a device to-be-charged wirelessly (for example, via an electromagnetic wave) for wireless charging of the device to-be-charged.

According to the wireless charging principle, the wireless charging can be in the manner of magnetic coupling (or electromagnetic induction), magnetic resonance, and radio waves.

At present, main wireless charging standard includes QI standard, power matters alliance (PMA) standard, and alliance for wireless power (A4WP) standard. Under the QI standard and the PMA standard, wireless charging is performed in the manner of magnetic coupling, and under the A4WP standard, wireless charging is performed in the manner of magnetic resonance.

The following will elaborate a wireless charging coil, a wireless charging assembly, and an electronic device provided in implementations with reference to the accompanying drawings.

A wireless charging coil in the related art includes a first tap and a second tap, which are configured to be connected with a wireless charging circuit. The first tap is arranged at an edge of the wireless charging coil. The second tap is pulled out from inside the wireless charging coil to be in parallel with the first tap, which makes it convenient for the wireless charging coil to be electrically connected with a main board. However, since the second tap is pulled out from inside the wireless charging coil, an area in which the second tap extends from inside the wireless charging coil to the edge of the wireless charging coil has a thickness of two layers of wirings, which increases thickness of the wireless charging coil.

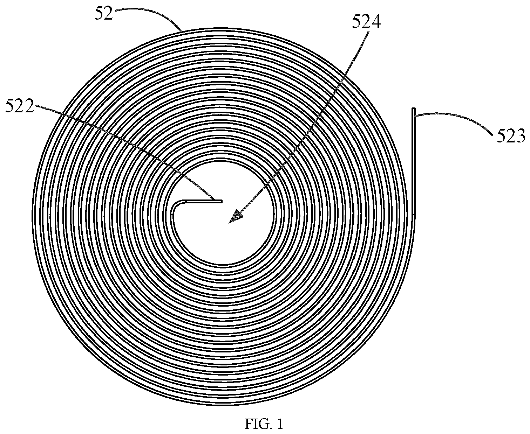

FIG. 1 is a schematic structural diagram of a wireless charging coil according to implementations. The wireless charging coil 52 includes a first connection end 522 and a second connection end 523. The first connection end 522 is disposed in the center of the wireless charging coil 52. The second connection end 523 is disposed at an edge of the wireless charging coil 52. The first connection end 522 is configured to be directly connected with a connection point on a circuit board.

The wireless charging coil 52 can be obtained by winding a metal wire. The metal wire includes the first connection end 522 and the second connection end 523. The first connection end 522 remains stationary. The metal wire is wound around the first connection end 522 into multiple turns, and a radius of each turn of metal wire increases gradually, such that the multiple turns of metal wire are not overlapped in the thickness direction. Two adjacent turns of metal wire may be adjacent to each other. The second connection end 523 is at an outermost side of the multiple turns of metal wire. The multiple turns of metal wire include at least two turns of metal wire. Alternatively, two adjacent turns of metal wire may not be adjacent to each other. An insulation layer can be disposed outside the metal wire. The metal wire may be an enameled wire. The metal wire can be made of metal or alloy that has a high electrical conductivity, such as copper, copper alloy, gold, etc. The length of the metal wire can be determined according to requirements of the wireless charging coil. The metal wire generally has a diameter of 1mm (millimeter) ∼ 2mm. The first connection end 522 and the second connection end 523 can be directly electrically connected with an external conductor. For example, the first connection end 522 and the second connection end 523 can be soldered or welded to the external conductor. For another example, the first connection end 522 and the second connection end 523 can be inserted into conductive holes, where the hole wall of the conductive hole is made of metal.

The first connection end 522 is directly electrically connected with the connection point of the circuit board from inside the wireless charging coil 52 without having to be pulled out from inside the wireless charging coil 52 to outside the wireless charging coil 52. A lead-out wire of the first connection end 522 does not need to cross the wireless charging coil 52. Unlike a wireless charging coil in the related art in which the first connection end 522 extends from inside the wireless charging coil 52 to outside the wireless charging coil 52, the wireless charging coil provided herein does not have a thickness of two layer wiring, which reduces thickness of the wireless charging coil 52. For example, smart phones are increasingly thinner at present. The wireless charging coil in the related art has two layers of wirings and thus is large in thickness, which prevents the smart phone from further becoming lighter and thinner. In contrast, the wireless charging coil 52 of a wireless charging assembly provided herein has a thickness of one single layer of wiring, which meets thickness requirements of smart phones. The connection point of the circuit board can be connected with a wireless charging circuit through a wiring printed on the circuit board.

In some implementations, the wireless charging coil 52 includes at least two turns of metal wire, where two adjacent turns of the at least two turns of metal wire are spaced apart by a gap, and the gap is filled with non-conductive material (that is, material that is not electrically conductive).

The metal wire can be first wound into multiple turns of metal wire, and a radius of each turn of metal wire increases gradually. Two adjacent turns of metal wire are spaced apart by a gap. Then the gap is filled with non-conductive material such as plastic, etc. As such, the wireless charging coil is obtained. Both ends of the wireless charging coil are designed to be conductive ports. In the center of the wireless charging coil is the first connection end, and at the edge of the wireless charging coil is the second connection end.

In some examples, an upper surface of the wireless charging coil 52 can be flat. In other examples, a lower surface of the wireless charging coil 52 can also be flat. A cross section of metal wire of the wireless charging coil 52 may be in a circular shape, or may be in other shapes such as an oval shape or a square shape.

In some implementations, the wireless charging coil 52 includes at least two turns of metal wire. An upper surface of any one of the at least two turns of metal wire is in the same plane. In other words, any two turns of metal wire of the wireless charging coil are approximately parallel to each other. All of the at least two turns of metal wire are on the same layer.

In some implementations, the wireless charging coil 52 includes at least two turns of wire, where the wire includes a metal wire and a protective layer wrapping the metal wire, the protective layer is made of non-conductive material, and an upper surface of any one of the at least two turns of wire is in the same plane.

The wire of the wireless charging coil 52 is first designed to be an independent insulated wire, that is, inside the wire is the metal wire, and the metal wire is wrapped with a non-conductive protective layer. Any two adjacent turns of wire are mutually non-conductive. The upper surface of any one of the at least two turns of wire is in the same plane. In other words, any two turns of wire of the wireless charging coil 52 are approximately parallel to each other. All of the at least two turns of wire are on the same layer. The metal wire of the wire may be a cylinder, and the protective layer wrapping the metal wire can be a hollow cylinder. Alternatively, the metal wire of the wire may be in other shapes such as an oval shape or a square shape, and the protective layer wrapping the metal wire can be in other shapes such as an oval shape or a square shape.

In some implementations, the wireless charging coil 52 includes at least two turns of wire. Two adjacent turns of the at least two turns of wire are spaced apart. The at least two turns of wire of the wireless charging coil 52 can be spaced apart in addition to being attached to each other, which can be properly adjusted according to requirements in different environments.

In some implementations, a turn of wire with a minimum radius in the at least two turns of wire of the wireless charging coil 52 defines a receiving area 524. The first connection end 522 is disposed inside the receiving area 524. The wireless charging coil 52 is hollow, that is, there is spare space in the center of wireless charging coil. The spare space is referred to as the receiving area 524. The first connection end 522 is disposed inside the receiving area 524. A segment of wire is extended from the turn of wire with a minimum radius of the wireless charging coil 52 to be connected with the first connection end 522. The first connection end 522 can be disposed in the center of wireless charging coil 52, that is, the center of the receiving area 524.

In other examples, the wireless charging coil is solid, that is, the center of wireless charging coil is the first connection end, and around the first connection end is the wire of the wireless charging coil. The wireless charging coil thus has a compact structure and the highest space utilization.

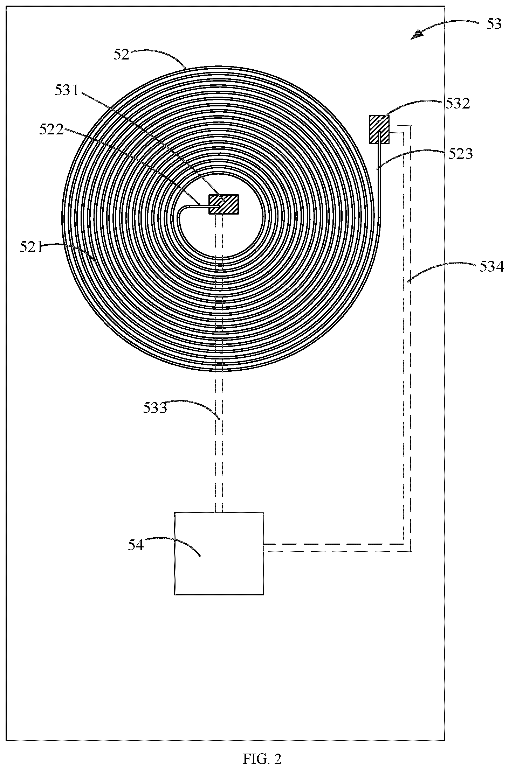

FIG. 2 is a schematic structural diagram of a wireless charging assembly according to implementations. As illustrated in FIG. 2, the wireless charging assembly includes a wireless charging coil 52 and a circuit board 53.

The wireless charging coil 52 includes a first connection end 522 and a second connection end 523. The first connection end 522 is disposed in the center of the wireless charging coil 52. The second connection end 523 is disposed at an edge of the wireless charging coil 52. The wireless charging coil 52 includes a metal wire. The metal wire includes the first connection end 522 and the second connection end 523. The metal wire can be wound around the first connection end 522 into at least two turns to obtain a coil pattern 521. The first connection end 522 is disposed in the center of the coil pattern 521. The second connection end 523 is disposed at an edge of the coil pattern 521.

The coil pattern 521 can be obtained by winding the metal wire. The metal wire includes the first connection end 522 and the second connection end 523. The first connection end 522 is held stationary. The metal wire is wound around the first connection end 522 into multiple turns, and a radius of each turn of metal wire increases gradually, such that the multiple turns of metal wire are not overlapped in the thickness direction. Two adjacent turns of metal wire may be adjacent to each other. The second connection end 523 is at the outermost of the multiple turns of metal wire. The multiple turns of metal wire include at least two turns of metal wire. Alternatively, two adjacent turns of metal wire may not be adjacent to each other. An insulation layer can be disposed outside the metal wire. The metal wire may be an enameled wire. The metal wire can be made of metal or alloy that has a high electrical conductivity, such as copper, copper alloy, gold, etc. The length of the metal wire can be determined according to requirements of the wireless charging coil. The metal wire generally has a diameter of 1mm∼2mm.

The circuit board 53 includes a first connection point 531 and a second connection point 532 which are disposed on a surface of the circuit board 53. The first connection point 531 is directly electrically connected with the first connection end 522. The second connection point 532 is electrically connected with the second connection end 523. The first connection point 531 and the second connection point 532 are electrically connected with a wireless charging circuit.

Inside the coil pattern 521, the first connection end 522 of the wireless charging coil 52 is directly electrically connected with a wiring of the circuit board 53 without being pulled out from inside the coil pattern 521 to outside the coil pattern 521. A lead-out wire of the first connection end 522 does not need to cross the coil pattern 521. Unlike a wireless charging coil in the related art in which the first connection end 522 extends from inside the coil pattern 521 to outside the coil pattern 521, the wireless charging coil provided herein does not have a thickness of two layers of wirings, which decreases thickness of the wireless charging coil 52. For example, smart phones are increasingly thinner at present. The wireless charging coil in the related art has two layers of wirings and thus is large in thickness, which is not conductive to the thinness of smart phones. By comparison, the wireless charging coil 52 of the wireless charging assembly provided herein has a thickness of one single layer of wiring, which meets thickness requirements of smart phones.

In some examples, an innermost turn of metal wire of the wireless charging coil 52 defines a hollow area. The first connection end 522 is disposed inside the hollow area. The first connection point 531 is disposed corresponding to the hollow area. As such, the first connection end 522 can be directly electrically connected with the first connection point 531 from inside the hollow area. A projection of the first connection end 522 on the circuit board 53 may intersect or coincide with the first connection point 531. The first connection point 531 can be directly welded to the first connection end 522 through soldering, thereby achieving a direct electrical connection between the first connection point 531 and the first connection end 522. Alternatively, the projection of the first connection end 522 on the circuit board 53 may not intersect the first connection point 531. Instead, there is a distance between the first connection point 531 and the first connection end 522, and the distance is short, for example, shorter than 1cm (centimeter). In this situation, the first connection point 531 can still be directly welded to the first connection end 522 through soldering, thereby achieving a direct electrical connection between the first connection point 531 and the first connection end 522.

In other examples, the innermost turn of metal wire of the wireless charging coil 52 is adjacently connected with the first connection end 522. There is no hollow area in the center of the wireless charging coil 52. The projection of the first connection end 522 on the circuit board 53 intersects or coincides with the first connection point 531. The first connection point 531 can be directly welded to the first connection end 522 through soldering, thereby achieving a direct electrical connection between the first connection point 531 and the first connection end 522.

The first connection point 531 and the second connection point 532 can be electrically connected with the wireless charging circuit via a wiring printed on the circuit board 53 or via a wiring arranged in the middle of the circuit board.

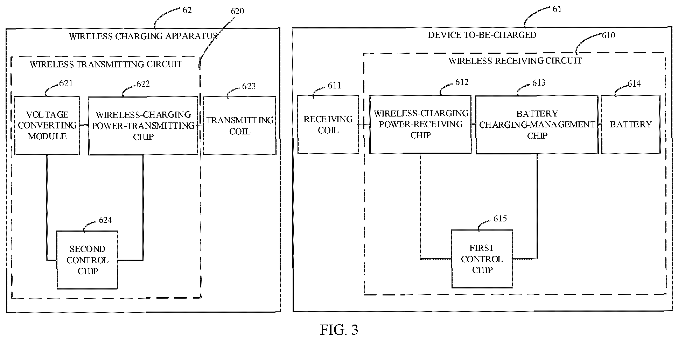

In some examples, the wireless charging coil is applicable to a device to-be-charged. The wireless charging circuit on the circuit board can be a wireless receiving circuit configured to receive a wireless signal to charge a battery. FIG. 3 is a schematic structural diagram of a wireless charging assembly according to other implementations. The wireless charging coil is applicable to a device to-be-charged 61. As to the device to-be-charged 61 (such as a mobile phone), the device to-be-charged 61 includes a receiving coil 611 (that is, the wireless charging coil) and a wireless receiving circuit 610. The wireless receiving circuit 610 includes a wireless-charging power-receiving chip 612, a battery charging-management chip 613, and a battery 614. The receiving coil 611 is configured to receive energy (such as electromagnetic energy) from a wireless charging apparatus 62 and convert the energy into an alternating current (AC) signal. The wireless-charging power-receiving chip 612 is electrically connected with the receiving coil 611 and is configured to perform analog-to-digital conversion on the AC signal received from the receiving coil 611 to obtain a direct current (DC) signal. The wireless-charging power-receiving chip 612 can be further configured to perform rectification, filtering, and the like before or after the analog-to-digital conversion. The battery charging-management chip 613 is electrically connected with the wireless-charging power-receiving chip 612 and is configured to convert the DC signal received from the wireless-charging power-receiving chip 612 into an electrical signal (for example, perform voltage conversion) for charging the battery 614. In this scenario, the wireless charging circuit that is electrically connected with the receiving coil 611 (that is, the wireless charging coil) is the wireless receiving circuit 610.

In some examples, the wireless receiving circuit 610 further includes a first control chip 615. The first control chip 615 is electrically connected with the wireless-charging power-receiving chip 612 and the battery charging-management chip 613 respectively. The first control chip 615 can be configured to control each of the wireless-charging power-receiving chip 612 and the battery charging-management chip 613 to work or stop working.

In other examples, the wireless charging coil is applicable to a wireless charging apparatus. The wireless charging circuit on the circuit board can be a wireless transmitting circuit configured to transmit a wireless signal.

In some examples, the wireless charging coil is applicable to the wireless charging apparatus 62. The wireless charging apparatus 62 (such as a wireless charging base) includes a transmitting coil 623 (that is, the wireless charging coil) and a wireless transmitting circuit 620. The wireless transmitting circuit 620 includes a voltage converting module 621 and a wireless-charging power-transmitting chip 622. The voltage converting module 621 is configured to perform voltage conversion, such as boosting a voltage of a circuit. The wireless-charging power-transmitting chip 622 is electrically connected with the voltage converting module 621 and is configured to perform digital-to-analog conversion (DC-AC) on the boosted voltage to obtain an AC signal. The transmitting coil 623 is electrically connected with the wireless-charging power-transmitting chip 622 and is configured to convert the AC signal into electromagnetic energy for transmission. In this scenario, the wireless charging circuit that is electrically connected with the transmitting coil 623 (that is, the wireless charging coil) is the wireless transmitting circuit 620.

The wireless transmitting circuit 620 further includes a wired interface. The wired interface is connected with a power supply (such as mains electricity) via an adaptor. The adaptor converts an output voltage of the power supply (such as an AC of 220V (volt)) into an electrical signal that suits the wireless charging apparatus (for example, a DC of 5V). The wired interface is electrically connected with the voltage converting module 621.

In some examples, the wireless transmitting circuit 620 further includes a second control chip 624. The second control chip 624 is electrically connected with the voltage converting module 621 and the wireless-charging power-transmitting chip 622 respectively. The second control chip 624 can be configured to control each of the voltage converting module 621 and the wireless-charging power-transmitting chip 622 to work or stop working.

In some examples, the wireless-charging power-transmitting chip 622 can be replaced with an inverter circuit and a resonant circuit. The inverter circuit can include multiple switch transistors. By controlling an on-time (that is, a duty cycle) of each switch transistor, an output power of the wireless transmitting circuit can be adjusted. The resonant circuit is configured to transmit electrical energy. For example, the resonant circuit can include a capacitor and a transmitting coil. By adjusting a resonant frequency of the resonant circuit, the output power of the wireless transmitting circuit can be adjusted.

The first connection point 531 is electrically connected with the first connection end 522. The second connection point 532 is electrically connected with the second connection end 523. The first connection point 531 and the second connection point 532 are connected with the wireless charging circuit 54. The wireless charging circuit 54 is configured to control the wireless charging coil 52 to transmit energy or receive energy.

In some implementations, the first connection point 531 is a bonding pad. The first connection point 531 is welded to the first connection end 522.

In some implementations, the second connection point 532 is a bonding pad. The second connection point 532 is welded to the second connection end 523.

In some implementations, the first connection point 531 is a bonding pad, and the first connection point 531 is welded to the first connection end 522. The second connection point 532 is a bonding pad, and the second connection point 532 is welded to the second connection end 523.

In some examples, the first connection point 531 and/or the second connection point 532 can be provided with a metal pin, to weld the first connection end 522 of the wireless charging coil 52 to the first connection point 531 and weld the second connection end 523 of the wireless charging coil 52 to the second connection point 532.

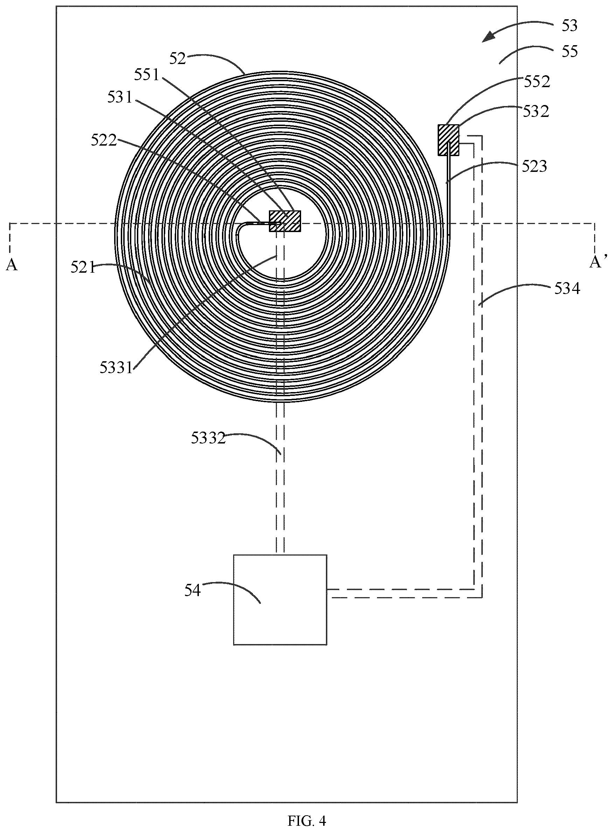

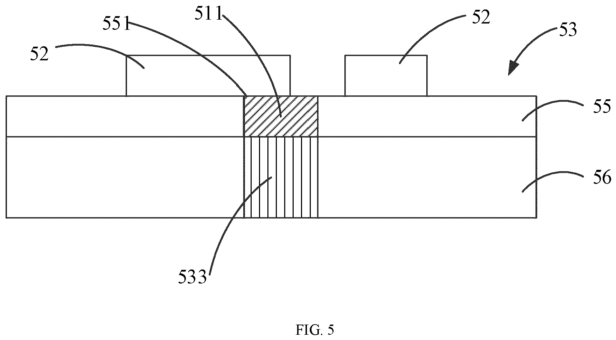

FIG. 4 is a schematic structural diagram of a wireless charging assembly according to other implementations. FIG. 5 is a cross sectional view of the wireless charging assembly along line A-A' in FIG. 4. The circuit board 53 further includes an insulation layer 55 and a wiring layer. The insulation layer 55 is disposed on the surface of the circuit board, where the insulation layer 55 defines a first opening 551, and the first connection point 531 is disposed in the first opening 551. The wiring layer is disposed in the middle of the circuit board 53, where a first wiring 533 of the wiring layer has one end electrically connected with the first connection point 531 in the first opening 551 and has the other end which, along with the second connection point 532, is electrically connected with the wireless charging circuit.

The first opening 551 and the first connection point 531 may be in the same shape, for example, a circular shape, an oval shape, a square shape, a rectangular shape, etc. Alternatively, the first opening 551 may be in a different shape from the first connection point 531. The first opening 551 may have an area smaller than the first connection point 531.

The wiring layer is disposed in the middle of the circuit board 53. The wiring layer is small in thickness. For example, a metal layer such as a copper metal layer can be coated on a substrate, and then etched to obtain a desired wiring layer. The wiring layer has a thickness of 15µm∼70µm (micrometer). In addition, the wiring layer itself already exists and therefore does not increase thickness, as long as a wiring in the wiring layer that corresponds to the first connection end 522 of the wireless charging coil is designed to extend to a position of the first connection point 531. The metal wire of the wireless charging coil is generally required to be 1mm∼2mm in thickness. If the first connection end of the wireless charging coil is guided from inside to the outside through the metal wire, an area in which the first connection end crosses the wireless charging coil from inside to the outside will have a thickness of 2mm∼4mm, which results in a significant increase in thickness and thus is not beneficial to lightness and thinness of an electronic device such as a mobile phone.

The insulation layer 55 is disposed on the surface of the circuit board 53. The wireless charging coil 52 is disposed on the insulation layer 55. The insulation layer 55 defines the first opening 551. The first opening 551 corresponds to the hollow area of the wireless charging coil 52, where the hollow area is defined by an innermost turn of metal wire of the coil pattern 521. The first connection point 531 is disposed in the first opening 551. The first connection end 522 of the wireless charging coil 52, which is disposed in the center of the coil pattern 521, can be electrically connected with the first connection point 531. The wiring layer is arranged under the insulation layer 55 of the circuit board 53. The wiring layer includes the first wiring 533, where the first connection point 531 is a connection point in the first wiring 533. The first connection end 522 of the wireless charging coil 52 is connected with one end of the first wiring 533 via the first connection point 531. The other end of the first wiring 533 is electrically connected with the wireless charging circuit 54. The second connection point 532 can be directly electrically connected with the wireless charging circuit 54. That is, the wireless charging circuit 54 is also disposed on the circuit board 53. The wireless charging circuit 54 is directly electrically connected with the second connection point 532. Alternatively, a bonding pad of a component (such as a capacitor, a chip, or the like) in the wireless charging circuit 54 that is connected with the wireless charging coil 52 is the second connection point 532. The first connection point 531 is electrically connected with the wireless charging circuit 54 via a wiring on the circuit board 53.

The circuit board 53 is a multi-layer board. Other layers (such as a power-supply layer, a grounding layer, etc) can be arranged between the wiring layer and the insulation layer 55. A through hole is defined between the wiring layer and the first opening 551. A wire is disposed in the through hole. The first wiring 533 in the wiring layer has one end electrically connected with the first connection end 522 of the wireless charging coil 52 via the wire in the through hole.

The wiring layer can include multiple wiring sub-layers. The first wiring 533 electrically connected with the wireless charging coil 52 is disposed in a first wiring sub-layer. Other wiring sub-layers can be arranged between the first wiring sub-layer and the insulation layer 55. The through hole is defined between the first wiring sub-layer and the first opening 551. The wire is disposed in the through hole. The first wiring 533 in the first wiring sub-layer has one end electrically connected with the first connection end 522 of the wireless charging coil 52 via the wire in the through hole.

In some implementations, the insulation layer 55 defines a second opening 552, and the second connection point 532 is disposed in the second opening 552. The wiring layer further includes a second wiring 534, and the second wiring 534 has one end electrically connected with the second connection point 532 in the second opening 552 and has the other end which, along with the other end of the first wiring 533, is electrically connected with the wireless charging circuit 54.

The second opening 552 is similar to the first opening 551. The second connection point 532 is disposed in the second opening 552 and electrically connected with the second wiring 534 of the wiring layer. The second wiring 534 and the first wiring 533 can be disposed on the same layer. The second wiring 534 has one end electrically connected with the second connection point 532 in the second opening 552 and has the other end which, along with the other end of the first wiring 533, is electrically connected with the wireless charging circuit 54. The first connection point 531 and the second connection point 532 are both electrically connected with the wireless charging circuit 54 via wirings in the circuit board 53. That is, the first connection end 522 of the wireless charging coil 52 is electrically connected with the wireless charging circuit 54 via the first wiring 533 in the circuit board 53, and the second connection end 523 of the wireless charging coil 52 is electrically connected with the wireless charging circuit 54 via the second wiring 534 in the circuit board 53.

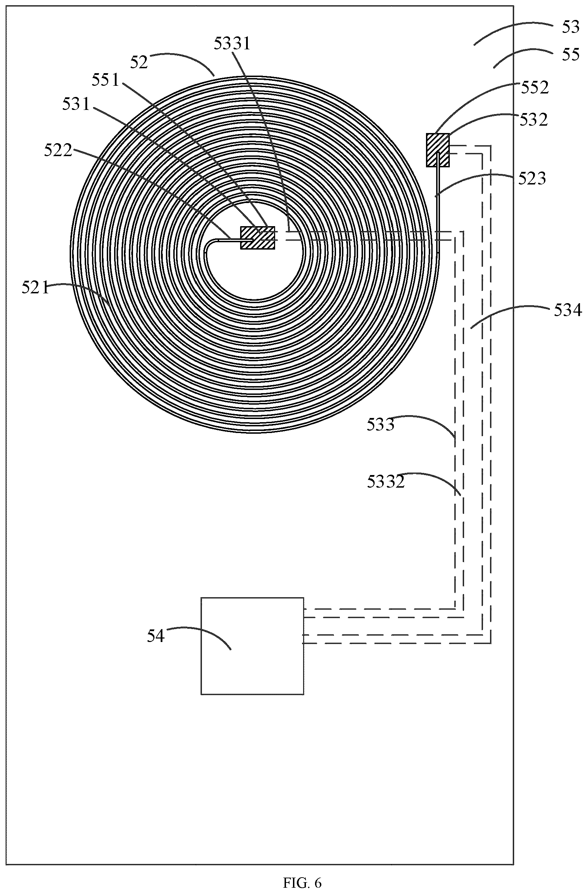

FIG. 6 is a schematic structural diagram of a wireless charging assembly according to other implementations. The first wiring 533 includes a first wiring segment 5331 and a second wiring segment 5332, where a projection of the first wiring segment 5331 on the circuit board 53 is inside the coil pattern 521, a projection of the second wiring segment 5332 on the circuit board 53 is outside the coil pattern 521, and the second wiring segment 5332 is adjacent to the second wiring 534.

The first wiring 533 is divided into the first wiring segment 5331 and the second wiring segment 5332. The projection of the first wiring segment 5331 on the circuit board 53 is inside the coil pattern 521, that is, the first wiring segment 5331 extends from inside the coil pattern 521 to outside the coil pattern 521. The projection of the second wiring segment 5332 on the circuit board 53 is outside the coil pattern 521. The second wiring segment 5332 is adjacent to the second wiring 534. This can facilitate arrangement of wirings of the wireless charging coil 52 on the circuit board 53. The second wiring segment 5332 can be parallel to the second wiring 534. In addition, the first wiring 533 and the second wiring 534 transmit an AC signal, which will cause serious interference. By disposing the first wiring 533 to be adjacent and parallel to the second wiring 534, a contact area between the AC signal and other modules can be reduced, which is possible to reduce interference on other modules and on the other hand, facilitate wiring.

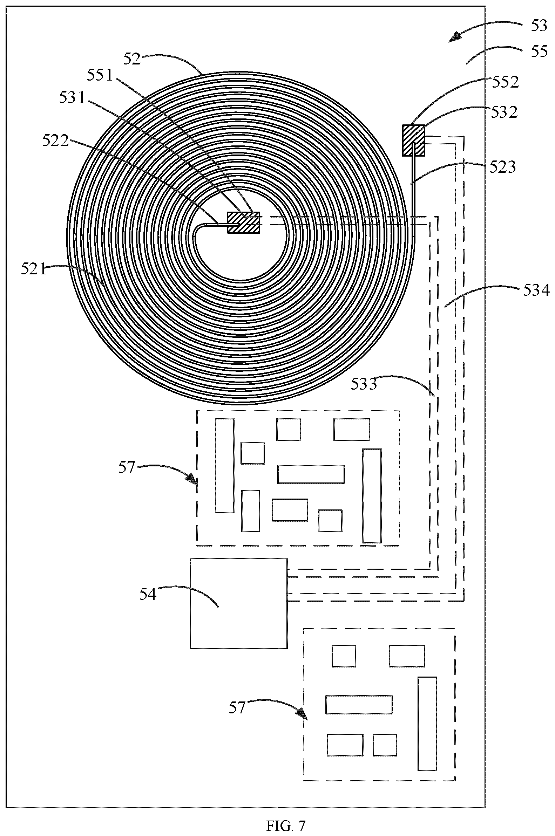

FIG. 7 is a schematic structural diagram of a wireless charging assembly according to other implementations. The circuit board 53 is divided into at least two areas by the first wiring 533. The circuit board 53 further includes a functional module 57. The functional module 57 includes multiple components. The multiple components are disposed in one of the at least two areas of the circuit board.

The first wiring 533 extends from the wireless charging circuit 54 to the first connection point 531 and divides the circuit board 53 into at least two areas. The circuit board 53 is further provided with other functional modules 57. When a smart phone is taken as an example, other functional modules 57 of the smart phone may be an audio module or a display module. Each functional module 57 includes multiple components. If the multiple components of the functional module 57 are disposed on both sides of the first wiring 533, since the first wiring 533 transmits an AC signal, signal interaction between components disposed on both sides of the first wiring 533 will be vulnerable to serious interference, which can affect performance of the functional module 57. Therefore, multiple components of one functional module 57 are disposed in one of the at least two areas of the circuit board, that is, on one side of the first wiring 533. The multiple components of the functional module 57 can also be disposed on one side of the second wiring 534, to reduce interference of the first wiring 533 and/or the second wiring 534 on other functional modules. The first wiring 533 can be parallel and adjacent to the second wiring 534.

If the first wiring 533 and the second wiring 534 are separately routed, the multiple components of the functional module 57 are disposed on one side of the first wiring 533 or one side of the second wiring 534, that is, the multiple components of the functional module 57 are not disposed on both sides of the first wiring 533 or the second wiring 534.

In some examples, the first connection end 522 is in the center of the coil pattern 521. As such, it is convenient for separating the first connection end 522 from the coil pattern 521 and thus convenient for welding the first connection end 522 to the first connection point 531. Turns of wire in the coil pattern 521 are adjacently arranged, and a radius of each turn gradually decreases from the outermost turn to the innermost turn. A hollow area is defined in the center of the coil pattern 521. The first connection end 522 extends from one end of the coil pattern 521 to the center of the hollow area instead of being adjacent to the wire of the coil pattern 521.

The first connection end 522 can be disposed in the very center of the coil pattern 521. A reception space of the circuit board 53 is reserved in advance for the wireless charging coil 52, and the first connection point 531 corresponding to the first connection end 522 and the second connection point 532 corresponding to the second connection end 523 are arranged on the circuit board 53. The first connection point 531 and the second connection point 532 can be bonding pads. The first connection point 531 that serves as the bonding pad is disposed corresponding to the very center of the coil pattern 521. The first connection end 522 and the first connection point 531 have a large space for welded connection, which is convenient for operation. In addition, the first connection end 522 and the first connection point 531 are distant from the surrounding coil pattern 521, and thus solder will not remain easily.

In some implementations, an electronic device includes a housing and a wireless charging assembly. The wireless charging assembly is received in the housing. The wireless charging assembly includes a wireless charging coil and a circuit board.

The wireless charging coil includes a metal wire. The metal wire includes a first connection end and a second connection end. The metal wire is wound around the first connection end into at least two turns to form a coil pattern. The first connection end is disposed in the center of the coil pattern. The second connection end is disposed at an edge of the coil pattern. The circuit board includes a first connection point and a second connection point which are disposed on a surface of the circuit board. The first connection point is directly electrically connected with the first connection end. The second connection point is electrically connected with the second connection end. A projection of the first connection end on the circuit board coincides with the first connection point. The first connection point and the second connection point are electrically connected with a wireless charging circuit. The electronic device may be a charging apparatus such as a wireless charging base, or may be a device to-be-charged such as a smart phone.

It should be noted that, the wireless charging assembly provided herein can also be the wireless charging assembly provided in any one of the foregoing implementations.

In some implementations, the electronic device further includes a battery. The battery is electrically connected with the wireless charging assembly, where the wireless charging assembly is configured to charge the battery.

As an example, the electronic device is a device to-be-charged. The wireless charging coil of the wireless charging assembly is configured to receive energy to be converted into electrical energy for charging the battery of the electronic device. The electronic device may be a device that includes the battery and the wireless charging assembly, and examples of the electronic device may include a smart phone, a tablet PC, or the like. The smart phone is becoming increasingly thinner at present. A wireless charging coil in the related art has two layers of wirings and thus is large in thickness, which is not conducive to the thinness of the smart phone. However, the wireless charging coil of the wireless charging assembly provided herein has a thickness one single layer of wiring, which meets thickness requirements of the smart phone.

In some implementations, the electronic device further includes a control module. The control module is configured to control the wireless charging coil to convert electrical energy into electromagnetic energy for transmission.

The wireless charging coil of the wireless charging assembly is configured to convert electrical energy into electromagnetic energy for transmission. The electronic device can be a wireless charging apparatus such as a wireless charging base.

The wireless charging base can include a standby battery. The wireless charging base may be connected in a wired manner with a power supply via an adaptor, or may be directly connected in a wired manner with the power supply. The wireless charging base can charge the standby battery. In case the power supply has no power, for example, power outage occurs in an urban district, the standby battery can be used for wireless charging of another device to-be-charged.

In some examples, the electronic device may be an accessory. The wireless charging coil of the wireless charging assembly of the accessory is configured to receive energy to be converted into electrical energy. The accessory can be in a wired connection with another device such as the smart phone. For example, the accessory has a first connecting port that is physically connected with a second connecting port of the smart phone. Then the accessory converts the energy received by the wireless charging coil therein into electrical energy to be transmitted, via the first connecting port and then via the second connecting port, to a battery of the smart phone for charging. The accessory may be implemented as a rear casing, a front casing, a holder, or a protective case of the smart phone, or may be implemented as other forms.

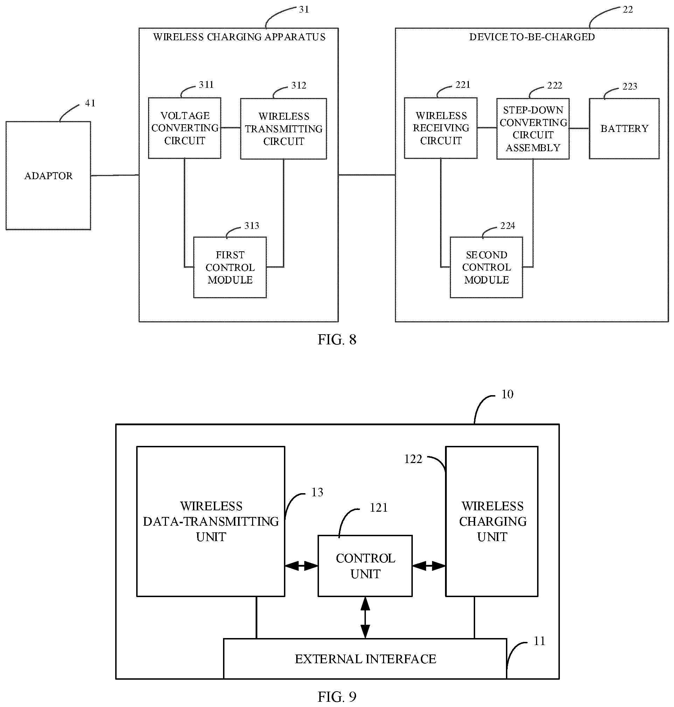

As illustrated in FIG. 8, a device to-be-charged 22 cooperates with a wireless charging apparatus 31 for wireless charging. The wireless charging apparatus 31 is coupled with a power supply (such as mains electricity) via an adaptor 41. The adaptor 41 converts the mains electricity (for example, 220V) into a voltage that suits the wireless charging apparatus 31. The wireless charging apparatus 31 includes a voltage converting circuit 311, a wireless transmitting circuit 312, and a first control module 313. The device to-be-charged 22 includes a wireless receiving circuit 221, a step-down converting circuit assembly 222, a battery 223, and a second control module 224.

The wireless charging apparatus 31 can include the voltage converting circuit 311, the wireless transmitting circuit 312, and the first control module 313. The voltage converting circuit 311 is electrically coupled with the adaptor 41 and the wireless transmitting circuit 312 respectively. The wireless transmitting circuit 312 is configured to transmit energy to charge the device to-be-charged 22. The first control module 313 is electrically coupled with the voltage converting circuit 311 and the wireless transmitting circuit 312 respectively. The voltage converting circuit 311 is configured to perform voltage conversion on an input voltage of the wireless charging apparatus 31, for example, to convert the mains electricity (such as 220V) into a suitable voltage (such as 15V, 12V, 9V, or the like). The wireless transmitting circuit 312 is configured to convert electrical energy into electromagnetic energy for transmission. The first control module 313 is configured to control on-off states of the voltage converting circuit 311 and the wireless transmitting circuit 312. The first control module 313 can be further configured to detect whether a reply message has been received from the device to-be-charged 22, and control on-off states of the voltage converting circuit 311 and the wireless transmitting circuit 312 according to the reply message. The reply message may include battery information of the device to-be-charged 22, such as whether the battery is fully charged. The reply message may also include a charging mode of the device to-be-charged 22.

The device to-be-charged 22 includes the wireless receiving circuit 221, the step-down converting circuit assembly 222, and the battery 223 that are electrically coupled in sequence. The device to-be-charged 22 further includes the second control module 224 that is electrically coupled with the wireless receiving circuit 221 and the step-down converting circuit assembly 222 respectively. The wireless receiving circuit 221 is configured to receive electromagnetic energy from the wireless transmitting circuit 312 of the wireless charging apparatus 31 and convert the electromagnetic energy into electrical energy. The step-down converting circuit assembly 222 is configured to decrease a voltage of (that is, step down) the electrical energy obtained through conversion of the electromagnetic energy (for example, decrease from 15V to 9V, decrease from 9V to 5V, etc). That is, the step-down converting circuit assembly 222 is configured to convert a high voltage and a small current outputted by the wireless receiving circuit 221 into a low voltage and a large current. The second control module 224 can be configured to control on-off states of the wireless receiving circuit 221 and the step-down converting circuit assembly 222. The second control module 224 can be further configured to detect whether a message has been received from the wireless charging apparatus 31, and control on-off states of the wireless receiving circuit 221 and the step-down converting circuit assembly 222 according to the message received.

In some examples, during wireless charging of the device to-be-charged, the wireless charging apparatus performs two-way communication with the device to-be-charged. As such, the wireless charging apparatus and the device to-be-charged can determine charging parameters (such as charging voltage / charging current) and charging modes (for example, charging modes of different charging powers can be selectively enabled (that is, switched on)).

In some examples, the wireless charging apparatus performs two-way communication with the device to-be-charged to acquire a voltage and/or a current of the battery of the device to-be-charged and adjust, according to the voltage and/or the current of the battery, a transmission power of the wireless transmitting circuit 312.

In some examples, communication information between the wireless charging apparatus and the device to-be-charged includes at least one of: temperature information of the battery, information indicative of a peak value or an average value of an output voltage and/or an output current of the wireless receiving circuit, information indicative of over-voltage protection or over-current protection, power-delivery efficiency information indicative of power-delivery efficiency between the wireless transmitting circuit and the wireless receiving circuit.

In some examples, the communication information includes the power-delivery efficiency information. The wireless charging apparatus can determine an adjustment rate of the transmission power of the wireless transmitting circuit according to the power-delivery efficiency information.

In some examples, the wireless charging apparatus is operable with any one of a first wireless charging mode and a second wireless charging mode, where a speed at which the wireless charging apparatus charges the device to-be-charged in the first wireless charging mode is higher than that in the second wireless charging mode.

In some examples, the wireless charging apparatus communicates with the device to-be-charged to negotiate which one of the first wireless charging mode and the second wireless charging mode to be enabled for wireless charging.

In some examples, the wireless charging apparatus can communicate with the device to-be-charged to negotiate which one of the first wireless charging mode and the second wireless charging mode to be enabled for wireless charging as follows. The wireless charging apparatus performs handshake communication with the device to-be-charged. When the handshake communication succeeds, the wireless charging apparatus is controlled to enable the first wireless charging mode to charge the device to-be-charged. When the handshake communication fails, the wireless charging apparatus is controlled to enable the second wireless charging mode to charge the device to-be-charged.

During wireless charging, a wireless charging coil is needed by both the wireless transmitting circuit 312 and the wireless receiving circuit 221. The wireless charging coil can be configured to convert electrical energy into electromagnetic energy, or convert electromagnetic energy into electrical energy.

The "electronic device" according to implementations can include but is not limited to a device configured via a wired line and/or a wireless interface to receive/transmit communication signals. Examples of the wired line may include, but are not limited to, at least one of a public switched telephone network (PSTN), a digital subscriber line (DSL), a digital cable, a direct connection cable, and/or another data connection line or network connection line. Examples of the wireless interface may include, but are not limited to, a wireless interface with a cellular network, a wireless local area network (WLAN), a digital television network (such as a digital video broadcasting-handheld (DVB-H) network), a satellite network, an amplitude modulation-frequency modulation (AM-FM) broadcast transmitter, and/or with another communication terminal. A communication terminal configured to communicate via a wireless interface may be called a "wireless communication terminal", a "wireless terminal", and/or a "mobile terminal". Examples of a mobile terminal may include, but are not limited to, a satellite or cellular telephone, a personal communication system (PCS) terminal capable of cellular radio telephone, data processing, fax, and/or data communication, a personal digital assistant (PDA) equipped with radio telephone, pager, Internet/Intranet access, web browsing, notebook, calendar, and/or global positioning system (GPS) receiver, and/or other electronic devices equipped with radio telephone receiver such as a conventional laptop or a handheld receiver.

The wireless charging apparatus provided herein includes an adaptor. The adaptor includes a control unit. There is no particular restriction on the content communicated between the control unit of the adaptor and the electronic device (such as the smart phone) and the manner in which the control unit controls an output of the adaptor in a second charging mode in implementations. For example, the control unit can communicate with the electronic device (such as the smart phone), to exchange a present voltage or a present electric quantity of a battery of the electronic device (such as the smart phone) and adjust an output voltage or an output current of the adaptor according to the present voltage or the present electric quantity of the battery. The following will elaborate with specific examples the content communicated between the control unit and the electronic device (such as the smart phone) and the manner in which the control unit controls the output of the adaptor in the second charging mode.

In some examples, the wireless charging apparatus is operable with any one of a first charging mode and the second charging mode, and a speed at which the wireless charging apparatus charges the device to-be-charged in the second charging mode is higher than that in the first charging mode. The wireless charging apparatus can perform two-way communication with the device to-be-charged to control an output power of the wireless charging apparatus as follows. The wireless charging apparatus performs two-way communication with the device to-be-charged to control the output power of the wireless charging apparatus in the second charging mode.

The type of the wireless charging apparatus can be various in implementations. For example, the wireless charging apparatus may be a wireless charging base, or may be other devices that can convert electrical signal into electromagnetic wave for wireless charging.

There is no particular restriction on the number and type of an external interface(s) of the wireless charging apparatus in implementations. In some examples, the wireless charging apparatus may include one external interface. The one external interface can be configured to both receive a charging power from an external device and transmit data provided by the external device. In other examples, the wireless charging apparatus may include multiple external interfaces. For example, the wireless charging apparatus may include two external interfaces. One of the two external interfaces is configured to be coupled with the electronic device, and the other one is configured to be coupled with the adaptor. The external interface(s) of the wireless charging apparatus may include, for example, at least one of a serial interface, a universal serial bus (USB) interface, and the like. The USB interface may be, for example, a USB 2.0 interface, a USB 3.0 interface, or a TYPE-C interface.

The manner of wireless charging can be various in implementations. For example, wireless charging can be performed based on at least one of magnetic coupling, magnetic resonance, and radio waves.

In some examples, wireless charging can be performed based on a conventional wireless charging standard. For example, wireless charging can be performed based on one of the following standards: QI standard, A4WP standard, and PMA standard.

The device to-be-charged further includes a wireless communication module. The wireless communication module is configured to, while the wireless charging apparatus is performing wireless charging on the device to-be-charged, transmit, through a wireless link, data stored in the wireless charging apparatus or in a second electronic device coupled with the wireless charging apparatus, to the electronic device, or transmit, through a wireless link, data stored in the device to-be-charged to the wireless charging apparatus or the second electronic device coupled with the wireless charging apparatus. The wireless charging apparatus can be equipped with a built-in memory configured to store data transmitted by the electronic device. The wireless charging apparatus can be coupled with the second electronic device, where the second electronic device may be devices with storage functions such as a computer, a mobile hard disk, or the like. The wireless charging apparatus can be in a wired connection, or in a wireless connection (for example, through Bluetooth, wireless fidelity (WIFI), or near-field communication (NFC)) with the second electronic device. The wireless communication module can store, via the wireless charging apparatus, data stored in the electronic device, into the second electronic device.

The device to-be-charged can communicate with the wireless charging apparatus with aid of a short-range wireless communication system. The short-range wireless communication system includes a transmitting-end device and a receiving-end device. The transmitting-end device and the receiving-end device can achieve a contactless high-speed data transmission. As an example, an extremely high frequency (EHF) antenna can be packaged in an integrated circuit (IC) chip of the transmitting-end device, such that the transmitting-end device can achieve a high-speed (for example, up to a transmission speed of 6GB (gigabyte)/s) wireless data transmission based on a high carrier frequency (such as 60GHz (gigahertz)). An EHF antenna can also be packaged in an IC chip of the receiving-end device, to achieve two-way communication between the transmitting-end device and the receiving-end device. Wireless data transmission between the transmitting-end device and the receiving-end device can be achieved via an electromagnetic signal. The transmitting-end device can be arranged inside the device to-be-charged, and the receiving-end device can be arranged inside the wireless charging apparatus. Alternatively, the transmitting-end device can be arranged inside the wireless charging apparatus, and the receiving-end device can be arranged inside the device to-be-charged. Alternatively, the transmitting-end device and the receiving-end device can be integrated together to enable one of a transmitting function and a receiving function according to different communication scenarios.

It should be understood that, high carrier frequency based short-range wireless communication has advantages of low power consumption, small volume, high transmission speed, and contactless transmission. On the other hand, high carrier frequency based short-range wireless communication can implement functions of a plug-and-play (PnP) module, which is possible to greatly improve signal integrity, allow for more flexible implementation of system, reduce standby power consumption, increase bandwidth amplitude, improve security of data transmission, and allow for compatibility with a high-speed video signal.

It should be understood that, a high carrier frequency can be a carrier frequency that can achieve high-speed wireless data transmission. The high carrier frequency may be a specific carrier frequency, or may be a carrier-frequency band, such as 30GHz∼300GHz, and the disclosure is not limited in this regard.

In some examples, the high carrier frequency is 60GHz.

In some examples, the transmitting-end device includes an IC chip with an EHF antenna packaged.

As an example, the transmitting-end device includes a separate transmission chip. For example, the separate transmission chip is an IC chip with an EHF antenna packaged. The separate transmission chip may have a transmission power of a high frequency of 60GHz. This can achieve data transmission at a high speed (for example, a transmission speed of 6GB/s) between the transmitting-end device and the receiving-end device.

In some examples, the device to-be-charged can perform two-way communication with the wireless charging apparatus via the wireless communication module. The wireless charging apparatus can include an adaptor. The wireless communication module can be configured to perform two-way communication with the wireless charging apparatus, to negotiate a charging mode between the adaptor and the device to-be-charged, that is, which one of the first charging mode and the second charging mode to be enabled between the adaptor and the device to-be-charged.

The type of data transmitted between the wireless charging apparatus and the second electronic device is not specifically restricted in implementations. For example, the wireless charging apparatus can transmit at least one of: data in USB protocol format, data in DP protocol format, and data in MHL protocol format.

In addition, the wireless charging apparatus can be configured to transmit data in multiple protocol formats to the second electronic device. For example, the wireless charging apparatus can transmit both data in USB protocol format and data in MHL protocol format.

The structure of the wireless charging apparatus can be various and any circuit structure can be adopted as long as functions of the wireless charging apparatus can be implemented. For example, as illustrated in FIG. 9, the wireless charging apparatus 10 includes a control unit 121 (such as a micro control unit (MCU)), a wireless charging unit 122, and a wireless data-transmitting unit 13. The control unit 121 and the wireless charging unit 122 can be configured to cooperatively implement functions of a wireless-charging control unit 12. On the other hand, a wireless data-transmission function of the wireless data-transmitting unit 13 can also be achieved under control of the control unit 121. In addition, via an external interface 11, the control unit 121 can communicate with an external device and/or interchange information with the external device. In other words, control functions of the wireless charging apparatus 10 can be all integrated into the control unit 121, and the control unit 121 is responsible for unified control. However, this disclosure is not limited thereto and alternatively, the wireless charging apparatus 10 can be provided with multiple control units for performing different control functions respectively.

The control unit 121 can communicate with an electronic device 30, to determine the type of the electronic device 30 and determine a power grade that matches a device to-be-charged 30. As an example, an input power of the external interface 11 is a DC power. The wireless charging unit 122 can include a converting circuit, a coil, and other elements. The converting circuit can be configured to convert a DC inputted from the external interface 11 into an AC. The coil can be configured to convert the AC into an electromagnetic wave to be transmitted to a receiving end. The device to-be-charged can communicate with the wireless charging apparatus to send the type of the device to-be-charged, a power grade, and the like to the wireless charging apparatus, so as to control an output power of the wireless charging apparatus.

As an example, a second electronic device 20 is a host device, the control unit 121 is the MCU, and the wireless charging apparatus 10 is a wireless charging base. When the host device is coupled with the wireless charging base via an external interface of the wireless charging base, the MCU determines a power that can be provided by the host device and the type of data that can be interchanged by the host device (such as data in USB 2.0 format, data in USB 3.0 format, image data, audio and video data, etc.). Then according to rules defined by the conventional wireless charging standard (such as QI standard, A4WP standard, or the like), the wireless charging apparatus 10 can provide multiple power grades for the device to-be-charged according to the power that can be provided by the host device. Examples of power grades include a low power grade (such as 5W (watt)) and a middle power grade (such as 10W and/or 15W). If the host device can provide a higher power, the conventional wireless charging standard (such as QI standard, A4WP standard, or the like) can be extended to provide a higher power grade for the device to-be-charged. The device to-be-charged can send its own power grade and control instructions to the wireless charging base and/or the host device, such that the wireless charging base and/or the host device can determine a power grade that matches the device to-be-charged.

It should be noted that, the above describes wireless charging performed by the wireless charging apparatus 10 based on the conventional wireless charging standard for illustrative purpose, but this disclosure is not limited thereto. The wireless charging apparatus 10 can also perform wireless charging based on a customized private standard or protocol. For example, the wireless charging apparatus 10 can determine the type of the electronic device, determine the power grade that matches the device to-be-charged, or the like based on the customized private standard or protocol.

In some examples, the wireless charging apparatus 10 can be coupled with an adaptor via the external interface 11 and perform wireless charging on the device to-be-charged 30 according to an output power of the adaptor. In other examples, the wireless charging apparatus 10 can function as the adaptor, that is, functions of the adaptor can be integrated into the wireless charging apparatus 10. The adaptor referred to herein may be a common adaptor in the related art, or may be an adaptor with an adjustable output power provided in implementations.

In wireless charging, the common adaptor in the related art and the adaptor with an adjustable output power provided herein have been described in detail. As pointed above, in order to apply the adaptor to the field of wireless charging, a first possible manner is to couple the adaptor with the wireless charging apparatus, to perform wireless charging on the electronic device according to the output power of the adaptor. In this situation, the wireless charging apparatus is mainly configured to convert the output power of the adaptor into a wireless power signal to be transmitted to the electronic device. A second possible manner is to directly use the wireless charging apparatus as the adaptor (that is, functions of the adaptor are integrated into the wireless charging apparatus), and the electronic device is charged according to the output power of the wireless charging apparatus. In this situation, besides converting an AC through voltage transformation, rectification, etc., the wireless charging apparatus is responsible for transmitting wirelessly to the electronic device voltage and current that are subjected to conversion, to perform wireless charging on the electronic device. In the following, the above two manners will be described in detail with reference to specific examples.

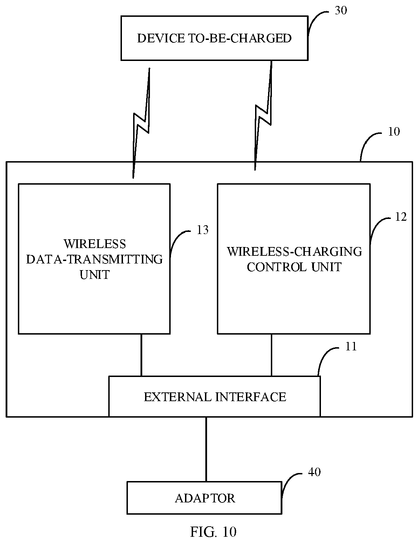

In the first possible manner, as illustrated in FIG. 10, the external interface 11 is coupled with an adaptor 40. The wireless charging apparatus 10 can be mainly configured to perform wireless charging when the external interface 11 is coupled with an adaptor 40. In this case, the wireless data-transmitting unit 13 may be in an idle state (that is, non-working state), or may transmit parameter information related to wireless charging.

The type of the adaptor 40 is not particularly limited in implementations. For example, the adaptor 40 can be the common adaptor in the related art. For another example, the adaptor 40 can be the adaptor with an adjustable output power provided in implementations, where such type of adaptor usually needs to perform two-way communication with the outside to negotiate or control an output power of the adaptor.

As an example, the adaptor 40 is the common adaptor. When the wireless charging apparatus 10 determines that the external interface 11 is coupled with the common adaptor, the wireless-charging control unit 12 can provide, according to rules defined by a wireless charging standard (such as QI standard, A4WP standard, or the like), one or multiple power grades for the device to-be-charged. Examples of power grades include the low power grade (such as 5W) and the middle power grade (such as 10W and/or 15W). Upon detecting the electronic device, the wireless charging apparatus 10 can communicate according to a wireless charging protocol provided by the wireless charging standard, to determine the type of the electronic device and determine a power grade that matches the electronic device. Then, the wireless charging base can perform wireless charging on the electronic device according to the power grade that matches the electronic device.

As another example, the adaptor 40 is the adaptor with an adjustable output power. The wireless-charging control unit 12 of the wireless charging apparatus 10 can perform two-way communication with the adaptor, to control (or negotiate) the output power of the adaptor and perform wireless charging on the electronic device 30 according to the output power of the adaptor. As described above, compared with the common adaptor in the related art, the adaptor with an adjustable output power provided herein can provide a higher output power, thereby providing a foundation for quick charging in the field of wireless charging.

Upon detecting that the external interface 11 is coupled with the adaptor, the wireless charging apparatus 10 can perform two-way communication with the adaptor. If the adaptor can support two-way communication, it indicates that the adaptor is the adaptor with an adjustable output power described above. In this situation, the wireless-charging control unit 12 of the wireless charging apparatus 10 can provide, according to rules defined by the wireless charging standard (such as QI standard, A4WP standard, or the like), one or multiple power grades for the device to-be-charged. Examples of power grades include the low power grade (such as 5W) and the middle power grade (such as 10W and/or 15W). Alternatively, the wireless-charging control unit 12 can extend the conventional wireless charging standard (such as QI standard, A4WP standard, or the like), such that the wireless-charging control unit 12 can support a higher power grade. In this way, upon detecting that the external interface 11 is coupled with the adaptor with an adjustable output power, the wireless charging apparatus 10 can provide a higher power grade for the device to-be-charged.

In some examples, the wireless charging apparatus 10 can perform two-way communication with the device to-be-charged based on a two-way communication protocol according to implementations (for details thereof, reference can be made to the foregoing description of a two-way communication process and an instruction set between the adaptor and the device to-be-charged), to provide the middle power grade or even provide a higher power grade.

As an example, the wireless charging apparatus 10 is the wireless charging base. When the device to-be-charged is coupled with the wireless charging base, the wireless charging base can perform two-way communication with the device to-be-charged based on the two-way communication protocol provided herein, to determine the type of the device to-be-charged and determine the power grade that matches the device to-be-charged ("power matching" for short). Then, the wireless charging base can perform wireless charging on the device to-be-charged according to the matched power. It should be noted that, power matching may involve current matching and voltage matching. For example, when the matched power is 10W, the matched voltage and the matched current may be 5V (volt) and 2A (ampere) respectively, or may be 10V and 1A respectively.

It should be noted that, there is no specific restriction on the content communicated between the wireless-charging control unit 12 and the adaptor in implementations, as long as control or negotiation of the output power of the adaptor can be achieved. The following will describe the content communicated between the wireless-charging control unit 12 and the adaptor with specific examples.

In some examples, the adaptor 40 is operable with any one of a first charging mode and a second charging mode, and a speed at which the adaptor 40 charges the device to-be-charged 30 in the second charging mode is higher than that in the first charging mode. The wireless-charging control unit 12 can perform two-way communication with the adaptor 40 to control the output power of the adaptor 40 as follows. The wireless-charging control unit 12 performs two-way communication with the adaptor 40 to control the output power of the adaptor 40 in the second charging mode.

It should be noted that, the output power of the adaptor 40 in the second charging mode can be determined by the wireless charging apparatus 10 on its own. Alternatively, the output power of the adaptor 40 in the second charging mode can be determined by the wireless charging apparatus 10 according to a state or capability of the device to-be-charged. Alternatively, the output power of the adaptor 40 in the second charging mode can be determined by the device to-be-charged 30. In this situation, the wireless charging apparatus 10 is mainly responsible for communication of information or instructions between the adaptor 40 and the device to-be-charged 30.

In some examples, the wireless-charging control unit 12 can perform two-way communication directly with the adaptor 40, to negotiate or control the output power of the adaptor in the second charging mode. For example, the wireless-charging control unit 12 can perform two-way communication with the adaptor 40 according to the two-way communication protocol provided herein (for details thereof, reference can be made to the foregoing description of the two-way communication process and the instruction set between the adaptor and the electronic device).

In some examples, the wireless-charging control unit 12 can perform two-way communication with the adaptor 40 to control the output power of the adaptor 40 in the second charging mode as follows. The wireless-charging control unit 12 performs two-way communication with the adaptor 40 to negotiate a charging mode of the adaptor 40.

For example, the adaptor 40 can send a first instruction to the wireless-charging control unit 12 to inquire the wireless-charging control unit 12 whether to enable the second charging mode. The wireless-charging control unit 12 sends to the adaptor a reply instruction of the first instruction, and the reply instruction is indicative of whether the wireless-charging control unit 12 agrees to enable the second charging mode. When the reply instruction of the first instruction indicates that the wireless-charging control unit 12 agrees to enable the second charging mode, the adaptor enables the second charging mode.

The manner in which the wireless-charging control unit 12 determines whether to enable the second charging mode can be various in implementations. As an example, the wireless-charging control unit 12 can directly agree to enable the second charging mode. As another example, the wireless-charging control unit 12 can send the first instruction to the electronic device 30, and the device to-be-charged 30 determines whether to enable the second charging mode. As another example, the wireless-charging control unit 12 can determine, according to the state of the device to-be-charged 30, whether to enable the second charging mode. Examples of the state of the device to-be-charged 30 may include whether the device to-be-charged is operable with the second charging mode, and/or a present electric quantity of the device to-be-charged.

In some examples, the wireless-charging control unit 12 can perform two-way communication with the adaptor 40 to control the output power of the adaptor 40 in the second charging mode as follows. The wireless-charging control unit 12 performs two-way communication with the adaptor 40 to control an output voltage of the adaptor in the second charging mode.

For example, the adaptor 40 can send a second instruction to the wireless-charging control unit 12 to inquire the wireless-charging control unit 12 whether a present output voltage of the adaptor 40 is suitable. The wireless-charging control unit 12 can send to the adaptor 40 a reply instruction of the second instruction, and the reply instruction indicates that the present output voltage of the adaptor 40 is suitable, high (that is, at a high voltage level), or low (that is, at a low voltage level), and as such, the adaptor 40 can adjust the output voltage thereof according to the reply instruction of the second instruction.

There is no particular restriction on the manner in which the wireless-charging control unit 12 determines the output voltage of the adaptor in the second charging mode in implementations. In some examples, the wireless-charging control unit 12 can determine on its own the output voltage of the adaptor in the second charging mode. For instance, upon detecting that the adaptor is the adaptor with an adjustable output power, the wireless-charging control unit 12 can directly adjust the output voltage of the adaptor 40 to a preset high grade. In other examples, the wireless-charging control unit 12 can communicate with the device to-be-charged 30 and control, according to information fed back by the device to-be-charged 30, the output voltage of the adaptor in the second charging mode.

In some examples, the wireless-charging control unit 12 can perform two-way communication with the adaptor to control the output power of the adaptor in the second charging mode as follows. The wireless-charging control unit 12 performs two-way communication with the adaptor to control an output current of the adaptor in the second charging mode.

For example, the adaptor 40 can send a third instruction to the wireless-charging control unit 12, to inquire the wireless-charging control unit 12 a current value of the output current of the adaptor or a maximum charging current that can be supported by the wireless charging apparatus. The wireless-charging control unit 12 can send to the adaptor 40 a reply instruction of the third instruction, and the reply instruction is indicative of the current value of the output current of the adaptor or the maximum charging current that can be supported by the wireless charging apparatus, and as such, the adaptor 40 can adjust the output current thereof according to the reply instruction of the third instruction.

There is no particular restriction on the manner in which the wireless-charging control unit 12 determines the output current of the adaptor in the second charging mode in implementations. In some examples, the wireless-charging control unit 12 can control on its own the output current of the adaptor in the second charging mode. For instance, upon detecting that the adaptor is the adaptor with an adjustable output power, the wireless-charging control unit 12 can directly adjust the output current of the adaptor to a preset high grade. In other examples, the wireless-charging control unit 12 can communicate with the device to-be-charged 30 and control, according to information fed back by the device to-be-charged 30, the output current of the adaptor in the second charging mode.

It should be noted that, there is no specific restriction on the manner in which the wireless-charging control unit 12 performs wireless charging on the device to-be-charged 30 according to the output power of the adaptor 40 in implementations. In some examples, the wireless-charging control unit 12 can perform wireless charging on the electronic device 30 still according to a wireless charging protocol provided by the conventional wireless charging standard (such as QI standard or A4WP standard). In other examples, the wireless-charging control unit 12 can perform wireless charging on the device to-be-charged 30 according to the two-way communication protocol provided herein (for details thereof, reference can be made to the foregoing description of the two-way communication process and the instruction set between the adaptor and the electronic device).

The wireless-charging control unit 12 can perform wireless charging on the device to-be-charged 30 according to the output power of the adaptor 40 as follows. The wireless-charging control unit 12 performs two-way communication with the device to-be-charged 30, to inquire whether the device to-be-charged 30 agrees to enable the second charging mode. When the device to-be-charged 30 agrees to enable the second charging mode, the wireless-charging control unit 12 performs wireless charging on the device to-be-charged 30 according to the output power of the adaptor 40 in the second charging mode.

A communication process of conventional wireless charging only includes determination of the type of the electronic device and determination of the power grade. According to the technical solution provided in implementations, based on a custom two-way communication protocol, the type of the adaptor (that is, whether the adaptor is operable with the second charging mode) is determined first. As such, the two-way communication protocol provided herein can be applied to wireless charging, which can provide a foundation for quick charging in the field of wireless charging.

In some examples, the wireless-charging control unit 12 can be further configured to perform two-way communication with the device to-be-charged 30 to adjust an output power of the wireless-charging control unit 12 while performing wireless charging on the device to-be-charged 30 according to the output power of the adaptor 40.

In the conventional wireless charging, it is impossible to adjust the output power of the wireless-charging control unit 12 after completion of power matching on the electronic device. According to implementations herein, a communication protocol between the wireless-charging control unit 12 and the device to-be-charged 30 is modified. During control of wireless charging, two-way communication between the wireless-charging control unit 12 and the device to-be-charged 30 can be maintained. In this way, the output power of the wireless-charging control unit 12 can be adjusted in real time according to actual needs, which makes wireless charging more flexible.

In the second possible manner (that is, the wireless charging apparatus 10 is directly used as the adaptor), the wireless-charging control unit 12 can be further configured to receive an AC, convert an input power of the AC into an output power of the wireless charging apparatus 10, and perform wireless charging on the device to-be-charged 30 according to the output power of the wireless charging apparatus 10.

By integrating functions of the adaptor into the wireless charging apparatus, the number of devices or apparatuses required in wireless charging can be decreased, which is possible to simplify the implementation of wireless charging.

It should be understood that, the wireless charging apparatus 10 may be integrated with functions of the common adaptor, or may be integrated with functions of the adaptor with an adjustable output power provided in implementations. As an example, the wireless charging apparatus 10 is integrated with the functions of the adaptor with an adjustable output power. The wireless charging apparatus 10 can perform two-way communication with the device to-be-charged to control the output power of the wireless charging apparatus 10. A two-way communication mechanism between the wireless charging apparatus 10 and the device to-be-charged can adopt a communication mechanism similar to a two-way communication mechanism between the adaptor with an adjustable output power and the electronic device during wired charging (for details thereof, reference can be made to the foregoing description). The difference lies in that a charging power is transmitted wirelessly between the wireless charging apparatus 10 and the device to-be-charged. The following will describe in detail a communication mechanism and a charging-control manner between the wireless charging apparatus 10 and the device to-be-charged in connection with specific examples.

In some examples, the wireless charging apparatus 10 can be operable with any one of the first charging mode and the second charging mode, and a speed at which the wireless charging apparatus 10 charges the device to-be-charged 30 in the second charging mode is higher than that in the first charging mode. The wireless charging apparatus 10 can perform two-way communication with the device to-be-charged 30 to control the output power of the wireless charging apparatus 10 as follows. The wireless charging apparatus 10 performs two-way communication with the device to-be-charged 30 to control the output power of the wireless charging apparatus 10 in the second charging mode.

In some examples, the wireless charging apparatus 10 can perform two-way communication with the device to-be-charged 30 to control the output power of the wireless charging apparatus 10 in the second charging mode as follows. The wireless charging apparatus 10 performs two-way communication with the device to-be-charged 30 to negotiate a charging mode of the wireless charging apparatus 10.

In some examples, the wireless charging apparatus 10 can perform two-way communication with the device to-be-charged 30 to control the output power of the wireless charging apparatus 10 in the second charging mode as follows. The wireless charging apparatus 10 performs two-way communication with the device to-be-charged 30 to control an output voltage of the wireless charging apparatus 10 in the second charging mode.

In some examples, the wireless charging apparatus 10 can perform two-way communication with the device to-be-charged 30 to control the output power of the wireless charging apparatus 10 in the second charging mode as follows. The wireless charging apparatus 10 performs two-way communication with the device to-be-charged 30 to control an output current of the wireless charging apparatus 10 in the second charging mode.

The above has described in detail functions of the wireless charging apparatus in connection with various examples. However, the various examples are independent from each other.

Description of each of the foregoing implementations has its own emphasis. For part not described in detail in one implementations, reference can be made to related description in other implementations.

The wireless charging coil, the wireless charging assembly, and the electronic device provided in implementations have been elaborated above. While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A wireless charging coil comprising a first connection end and a second connection end, the first connection end being disposed in the center of the wireless charging coil, the second connection end being disposed at an edge of the wireless charging coil, and the first connection end being configured to be directly connected with a connection point on a circuit board.

2. The wireless charging coil of claim 1, comprising at least two turns of metal wire, wherein two adjacent turns of the at least two turns of metal wire are spaced apart by a gap, and the gap is filled with non-conductive material.

3. The wireless charging coil of claim 2, wherein an upper surface of any one of the at least two turns of metal wire is in the same plane.

4. The wireless charging coil of claim 1, comprising at least two turns of wire, wherein the wire comprises a metal wire and a protective layer wrapping the metal wire, the protective layer is made of non-conductive material, and an upper surface of any one of the at least two turns of wire is in the same plane.

5. The wireless charging coil of claim 4, wherein two adjacent turns of the at least two turns of wire are spaced apart.

6. The wireless charging coil of claim 4, wherein a turn of wire with a minimum radius in the at least two turns of wire defines a receiving area, and the first connection end is disposed inside the receiving area.

7. A wireless charging assembly, comprising:
a wireless charging coil comprising a first connection end and a second connection end, the first connection end being disposed in the center of the wireless charging coil, and the second connection end being disposed at an edge of the wireless charging coil; and
a circuit board comprising a first connection point and a second connection point which are disposed on a surface of the circuit board, the first connection point being directly electrically connected with the first connection end, the second connection point being electrically connected with the second connection end, and the first connection point and the second connection point being electrically connected with a wireless charging circuit.

8. The wireless charging assembly of claim 7, wherein the circuit board further comprises
an insulation layer disposed on the surface of the circuit board, wherein the insulation layer defines a first opening, and the first connection point is disposed in the first opening; and
a wiring layer disposed in the middle of the circuit board, wherein a first wiring of the wiring layer has one end electrically connected with the first connection point in the first opening and has the other end which, along with the second connection point, is electrically connected with the wireless charging circuit.

9. The wireless charging assembly of claim 8, wherein the insulation layer defines a second opening, and the second connection point is disposed in the second opening; and
the wiring layer further comprises a second wiring, and the second wiring has one end electrically connected with the second connection point in the second opening and has the other end which, along with the other end of the first wiring, is electrically connected with the wireless charging circuit.

10. The wireless charging assembly of claim 9, wherein the first wiring comprises a first wiring segment and a second wiring segment, a projection of the first wiring segment on the circuit board is inside the wireless charging coil, a projection of the second wiring segment on the circuit board is outside the wireless charging coil, and the second wiring segment is adjacent to the second wiring.

11. The wireless charging assembly of claim 8, wherein the circuit board is divided into at least two areas by the first wiring; and
the circuit board further comprises a functional module, the functional module comprises a plurality of components, and the plurality of components are disposed in one of the at least two areas of the circuit board.

12. The wireless charging assembly of claim 7, wherein the first connection point is a bonding pad, and the first connection point is welded to the first connection end.

13. The wireless charging assembly of claim 7, wherein the second connection point is a bonding pad, and the second connection point is welded to the second connection end.

14. The wireless charging assembly of claim 7, wherein
the first connection point is a bonding pad, and the first connection point is welded to the first connection end; and
the second connection point is a bonding pad, and the second connection point is welded to the second connection end.

15. An electronic device comprising a housing and a wireless charging assembly, the wireless charging assembly being received in the housing, and the wireless charging assembly comprising
a wireless charging coil comprising a first connection end and a second connection end, the first connection end being disposed in the center of the wireless charging coil, and the second connection end being disposed at an edge of the wireless charging coil; and
a circuit board comprising a first connection point and a second connection point which are disposed on a surface of the circuit board, the first connection point being directly electrically connected with the first connection end, the second connection point being electrically connected with the second connection end, and the first connection point and the second connection point being electrically connected with a wireless charging circuit.

16. The electronic device of claim 15, further comprising
a battery electrically connected with the wireless charging assembly, wherein the wireless charging assembly is configured to charge the battery.

17. The electronic device of claim 15, further comprising
a control module configured to control the wireless charging coil to convert electrical energy into electromagnetic energy for transmission.

18. The electronic device of claim 15, wherein the circuit board further comprises
an insulation layer disposed on the surface of the circuit board, wherein the insulation layer defines a first opening, and the first connection point is disposed in the first opening; and
a wiring layer disposed in the middle of the circuit board, wherein a first wiring of the wiring layer has one end electrically connected with the first connection point in the first opening and has the other end which, along with the second connection point, is electrically connected with the wireless charging circuit.

19. The electronic device of claim 18, wherein the insulation layer defines a second opening, and the second connection point is disposed in the second opening; and
the wiring layer further comprises a second wiring, and the second wiring has one end electrically connected with the second connection point in the second opening and has the other end which, along with the other end of the first wiring, is electrically connected with the wireless charging circuit.

20. The electronic device of claim 15, wherein the wireless charging coil comprises at least two turns of metal wire, two adjacent turns of the at least two turns of metal wire are spaced apart by a gap, and the gap is filled with non-conductive material.
